# EUROPÄISCHE PATENTSCHRIFT

(11) **EP 0 712 428 B1**
(45) Veröffentlichungstag und Bekanntmachung des Hinweises auf die Patenterteilung: **18.03.1998**
(21) Anmeldenummer: 94925417.1
(22) Anmeldetag: 29.07.1994
(51) Int. Cl.: C08L 97/02

(54) **FORMKÖRPER AUS BZW. MIT EINEM UMWELTVERTRÄGLICHEN WERKSTOFF, VERFAHREN ZU DESSEN HERSTELLUNG SOWIE DESSEN VERWENDUNG**
MOULDING MADE FROM OR INCLUDING AN ENVIRONMENTALLY ACCEPTABLE MATERIAL, A PROCESS FOR MANUFACTURING THE SAME, AND THE USE OF SAID MOULDING
CORPS MOULE CONSTITUE PAR OU RENFERMANT UN MATERIAU NE NUISANT PAS A L'ENVIRONNEMENT, SON PROCEDE DE FABRICATION ET SON APPLICATION

(30) Priorität: 29.07.1993 AT 1512/93
(43) Veröffentlichungstag der Anmeldung: 22.05.1996
(73) Patentinhaber: Rettenbacher, Markus, Dipl.-Ing., A-5412 Puch/Salzburg (AT); Mundigler, Norbert, Dipl.-Ing., A-3423 St. Andrä/Wördern (AT)
(72) Erfinder: Rettenbacher, Markus, Dipl.-Ing., A-5412 Puch/Salzburg (AT); Mundigler, Norbert, Dipl.-Ing., A-3423 St. Andrä/Wördern (AT)
(74) Vertreter: Büchel, Kurt F., Dr.
(86) Internationale Anmeldenummer: EP9402535
(87) Internationale Veröffentlichungsnummer: WO9504111

(56) Entgegenhaltungen:
- EP-A- 0 524 920
- WO-A-94/14886
- DE-A- 440 635
- FR-A- 837 617
- GB-A- 542 794
- GB-A- 869 445
- US-A- 1 664 601
- US-A- 4 377 440
- DATABASE WPI Week 8943, Derwent Publications Ltd., London, GB; AN 89-312865 & JP,A,1 230 672 (YAMAOKA K) 14. September 1989
- DATABASE WPI Week 8415, Derwent Publications Ltd., London, GB; AN 84-092852 & SU,A,1 024 484 (LENINGRAD FORESTRY ACAD.) 23. Juni 1983

## Beschreibung

Die Erfindung betrifft einen neuartigen, biologisch abbaubaren Formkörper auf der Basis von pflanzlichem Fasermaterial, das in eine Matrix mindestens eines bei erhöhter Temperatur und erhöhtem Druck in einen gelschmelze-artigen Zustand überführten, thermoplastisch verarbeiteten, biogenen Materials integriert ist.

Es ist eine grosse Anzahl von synthetischen, teilweise mit natürlichem Fasermaterial gefüllten Werkstoffen für die verschiedensten Zwecke, insbesondere für Zubehörteile, Möbelelemente jeglicher Art und für die verschiedensten Branchen und Gewerbebereiche bekannt geworden, denen zumindest der eine schwere Nachteil anhaftet, wenig umweltfreundlich entsorgbar und insbesondere auch nicht - wenigstens langfristig und zu wesentlichen Teilen - biologisch abbaubar zu sein.

Infolge des wesentlich gesteigerten Umweltbewusstseins, insbesondere auch im Zuge eines die fossilen Ressourcen schonenden Einsatzes von nachwachsenden Rohstoffen, ist eine grosse Zahl von Veröffentlichungen und Schutzrechten bekannt geworden, welche biologisch abbaubare, recyclingfähige Materialien auf Basis von Stärke oder diese als wesentlichen Bestandteil enthaltenden Pflanzen bzw. Pflanzenteilen, Dextrinen, Zellwandpolysacchariden, Proteinen und Chitinen zum Gegenstand haben.

Es sei hierzu nur beispielhaft auf Artikel aus spritzgegossener Stärke usw. - z.B. für Verpackungen - hingewiesen, wie sie in EP 0304401 A3 und GB 2208651 A geoffenbart sind.

Bekannt geworden ist auch ein Werkstoff auf Basis eines Pflanzenfasermaterials, wie insbesondere Holz, welches in eine Stärkematrix oder ein entsprechendes gel-geschmolzenes Biomaterial integriert ist, wobei dort die Matrix selbst infolge Expansion bei Extrusion der Stärke-Faser-Masse eine hohe Zahl an Poren aufweist. Dies ergibt ein leicht handhabbares, mechanisch festes und auf übliche Weise bearbeitbares Material mit auffallend geringer Raumdichte und hohem Wärmedämmvermögen. Dazu sei, ebenfalls nur beispielhaft, die WO 90/14935 A1 genannt.

Für die verschiedensten Zwecke, insbesondere wenn hohe Festigkeit, Wasserresistenz, geringe Sprödigkeit und kompakter Griff gefragt bzw. gefordert sind, überwiegen bei den erwähnten Leicht-Dichte-Produkten jedoch oft deren Schwächen in genau diesen Punkten. Daher wird der Ruf nach einem kompakten, biogenen Produkt laut, welches üblichem Gebrauch und Verschleiss langfristig standhält und bei welchem eine erhöhte Dichte keinen wesentlich störenden Faktor bildet.

Die Erfindung hat sich die Aufgabe gestellt, ein neues Produkt auf Basis von pflanzlichem Fasermaterial und einem oder mehreren biogenen Schmelze-Gel-Bindern zu schaffen, dem sich - bei voller Aufrechterhaltung der Umweltverträglichkeit und biologischen Abbaubarkeit - infolge seiner Kompaktheit und Stabilität Einsatzgebiete öffnen, die bisher nur dem praktisch bloss spanabhebend bearbeitbaren Holz bzw. Faserplattenmaterial oder aber dem Synthese-Kunststoff vorbehalten waren.

Die Lösung der Aufgabe besteht gemäss der vorliegenden Erfindung bei einem Formkörper der eingangs genannten Art im wesentlichen darin, dass er folgende charakteristischen Merkmale aufweist:
er ist im wesentlichen frei von Poren;
er besteht aus einer Formmasse mit Partikeln mindestens eines, insbesondere recyclierten, pflanzlichen Fasermaterials, bevorzugt auf Holz- und/oder Cellulosebasis, sowie weiteren Zusätzen;
diese Partikel sind in eine Matrix mindestens eines gelschmelze-bildenden Bindemittels aus der Gruppe der Bio-Polymere, vorzugsweise der Stärken, Proteine, Lignine, Hemicellulosen, Dextrine, Pectine und/oder Chitine, insbesondere der Stärken bzw. Stärke in überwiegendem Ausmass enthaltenden Zerealien, gegebenenfalls in Mischung mit Protein, eingebettet;
sie sind ausserdem mit mindestens einer Harzsäure, gegebenenfalls im Gemisch mit mindestens einer Fettsäure, insbesondere aus Tallöl und/oder natürlichen Harzen, zumindest teilweise durchtränkt; und
der Gesamt-Wassergehalt des Formkörpers beträgt 3 bis 18 Gew.%, vorzugsweise 3-16 Gew.%, insbesondere 4-12 Gew.%, und der zugrundeliegende Werkstoff bzw. die zugrundeliegende Formmasse enthält folgende Komponenten in folgenden Zusammensetzungen:

| Gew.% | bevorzugte Gew.% | Komponente | bevorzugte Komponente |
|---|---|---|---|
| 40 - 80 | 48 - 60 | pflanzl. Fasermaterial | Holz, Cellulose |
| 15 - 45 | 20 - 35 | gel-schmelze-bildende Bio-Polymere | Stärken, Proteine |
| 2 - 15 | 5 - 10 | Harzsäure(n), ggf. Fettsäure(n) | aus Tallöl u./o. natürl. Harzen |
| 1 - 10 | 1.5 - 7 | Fette, Öle, Wachse | härtende Öle |
| 0.5 - 12 | 2 - 8 | expansionsunterdrückende Polyole, Salze | Glycerin |

Unter Harzsäure(n) sollen hierin Harzsäuren, wie sie bei der Aufarbeitung von natürlichen Harzen anfallen, aber auch Harzsäurederivate und modifizierte, z.B. mit Polyolen veresterte Harzsäuren, beispielsweise auf der Basis von Diterpenen und/oder Triterpenen, oder dergleichen verstanden werden.
Im weiteren Sinne sind auch natürliche Hart-Harze, WeichHarze (Balsame) und/oder Schleimharze gemeint, welche derartige Harzsäuren als Hauptkomponenten enthalten, beispielsweise Dammar, Kopale, Elemi, Gutti u.dgl.

Es zeigte sich überraschend, dass sich der neue Werkstoff, obwohl mittels Thermoplast-Herstellungs- und Umform-Prozess(en) erhalten, durch eine hohe Holzähnlichkeit auszeichnet. Diese Holz-Ähnlichkeit macht ihn allen aus der Holzbearbeitungs-, Holzverarbeitungs-, Oberflächenbehandlungs- und Holzverbindungs-Technik bekannten und bewährten Verfahren, wie z.B. Bohren, Sägen, Schleifen, Schnitzen, Schneiden, Leimen, Dübeln, Schrauben, Lackieren, Beschichten und dergleichen, zugänglich. Sie ermöglicht zudem einen Qualitätssynergismus, welcher mit den üblichen Kunststoffmaterialien, z.B. auf Basis von Polyvinyl- oder Alkylenpolymeren, nicht zu erreichen ist.

Gegenüber Holz hat das neue Produkt u.a. den Vorteil der freien Formwahl sowie - als Folge seines homogenen Aufbaus - den Vorteil der Unabbhängigkeit seiner Charakteristik von der Faserrichtung, von Fehlstellen und Jahresringen. Ausserdem zeigt es - insbesondere aufgrund seiner Zusammensetzung aus Bio-Polymer(en) und partikulärem Fasermaterial - eine gegenüber gewöhnlichem Holz bedeutend raschere biologische Abbaubarkeit.

Wesentlich ist bei dem neuen Produkt, dass es praktisch porenfrei kompakt gefertigt ist, also dass bei seiner Herstellung jegliche Expansion und Porenbildung im wesentlichen ausgeschaltet sind. Es hat sich gezeigt, dass es zur Erreichung der beschriebenen, vorteilhaften Materialeigenschaften der neuen Formkörper günstig ist, die Menge des gel-geschmolzenen Bindemittels im Vergleich zur Menge an Pflanzenfasermaterial, z.B. Holz, relativ gering zu halten.

Unerwartet, bzw. den Erwartungen vollkommen entgegengesetzt, wird durch die (Teil)-Imprägnierung der Faser- bzw. der Holzpartikel mit Harzsäure(n), beispielsweise aus Tallöl oder natürlichen Harzen, gegebenenfalls im Gemisch mit Fettsäuren, und/oder Fetten/Ölen/Wachsen eine besonders günstige synergistische Einbindung der Faserstoffe in eine Stärke/Protein-Gelmatrix erzielt.

Als wesentlicher Bestandteil des Tallöls ist die Abietinsäure, eine Harzsäure, zu nennen. Daneben enthält Tallöl übrigens auch Anteile lufthärtender Öle, die zur endgültigen Resistenz und Stabilität der neuen Formkörper zusätzlich beitragen, sowie einen erheblichen Anteil Fettsäuren, insbesondere an Ölsäure.

Auch Naturharze enthalten überwiegend Harzsäuren, Harzalkohole und deren Ester, sowie Phenole mit Gerbstoffcharakter und ungesättigte, z.T sauerstoffhaltige Verbindungen. Der Gerbstoffcharakter tritt insbesondere in Kombination mit Proteinanteilen in der Matrix in vorteilhafter Weise in Erscheinung und trägt damit ebenfalls zur Stabilität und Wasserfestigkeit der erfindungsgemässen Formkörper bei.

Den Thermoplastanteil bilden Bio-Polymere wie Stärken jeder Herkunft und die sie beinhaltenden Pflanzenteile, insbesondere jene von Reis, Kartoffeln und Mais. Die in der Formmasse bzw. im Werkstoff vorhandenen Stärken und/oder Proteine können jedoch für bestimmte Anwendungsfälle auch durch andere Bio-Polymere wie Lignine und/oder Hemicellulosen vollständig, bzw. durch Dextrine, Pektine und/oder Chitine u.dgl. zum Teil, gegebenenfalls bis zu 55 Gew.%, vorteilhaft bis zu 20 Gew.%, ersetzt sein. Insbesondere Lignine können dabei einen zusätzlichen Beitrag zu einer erhöhten Wasserfestigkeit leisten. Als Proteine kommen solche pflanzlicher als auch tierischer Herkunft in Frage, z.B. Schrot aus der Sojabohnenextraktion, Gelatine jeglicher Art, verschiedene Kollagene u.dgl.

Fasermaterial kann jedes beliebige sein, solange es pflanzlicher Herkunft ist, also z.3. Cellulose, Zellstoff, Watte, Papier- und Pappe-Partikel, Holzschliff, etc., und vorzugsweise Holzpartikel.

Als Pflanzenfasermaterial ist aufgrund seiner Verfügbarkeit und seines geringen Preises, insbesondere wenn Abfälle anfallen, Holz besonders bevorzugt; es verleiht dem neuen Werkstoff üblicherweise auch ohne entsprechende Zusätze eine zumindest hellbeige Eigenfarbe, die je nach Holzart und Verarbeitungsbedingungen bis etwa dunkelbraun variieren kann.
Die Einhaltung der Wassergehalte der neuen Formkörper garantiert deren holzähnliche Eigenschaften ebenso wie ihre Feuchteresistenz.

Werden weisse oder ganz helle Eigenfarben angestrebt, so ist der Einsatz von Zellstoff oder Cellulose, aber auch von Baumwollfasern u.dgl. von Vorteil; diese Materialien führen zu Produkten mit hoher Homogenität und Festigkeit. Andere Fasermaterialien können z.B. Stroh, Kapok, Jute u.dgl. sein.

Durch Variationen in der Länge und Dicke des verwendeten Fasermaterials von 0.05-35 mm, vorzugsweise 1-5 mm Länge, bzw. 0.05-3 mm, vorzugsweise 0.1-1.5 mm Dicke, lassen sich darüber hinaus Stabilität und Festigkeit der erfindungsgemässen Formkörper in einem weiten Bereich steuern. Längere Fasern bedeuten dabei im allgemeinen eine höhere Festigkeit.

Was die Fette/Öle/Wachse betrifft, sind hier nur eventuell bezüglich ihrer Haltbarkeit unter Umständen Grenzen gesetzt; vorteilhaft sind härtende Öle, die einerseits als Verarbeitungshilfsmittel bei der Herstellung der neuen Formkörper fungieren und andererseits eine langfristig zunehmende Vernetzung und Verfestigung der Komponenten des neuen Produktes sicherstellen. Zusätzlich haben diese Stoffgruppen den Vorteil, als Formtrennmittel bereits in der Formmasse vorzuliegen.

Zur Variation der Eigenschaften der neuen Formkörper bezüglich Farbe, Griff, Glanz und Festigkeit bieten sich in vorteilhafter Weise beispielsweise folgende Komponenten bzw. Additive in einer Konzentration von 0.1-5 Gew.%, insbesondere 0.5-3 Gew.%, jeweils bezogen auf die Gesamtmasse, an:
Farbstoffe, Füllstoffe organischer oder anorganischer Herkunft, Gerbstoffe, Weichmacher, Biozide, und aushärtbare Heisshärtungskomponenten, z.B. Aldehydharze. Bei Einsatz von Gerbmitteln, z.B. verschiedenen Aldehyden, wird dabei - im Falle des Vorliegens eines Protein-Schmelze-Gels in der Matrix bzw. als Matrix - eine gerbungsähnliche Fällung des Proteins erreicht. Dadurch wird eine Eigenschaftsänderung in Richtung erhöhter Resistenz gegen qualitätsmindernde Einflüsse, beispielsweise gegen optische Qualitätseinbusse, wie insbesondere Anschmutzung, bewirkt.

Eine vorteilhafte Erweiterung der Einsatzmöglichkeiten bieten Wasser- und Feuchteresistenz steigernde Zusätze, beispielsweise Harze und Kautschuke, vorzugsweise biogene Harze und Kautschuke.

Angenehme Nebenwirkung der mehrwertigen Alkohole (Polyole), beispielsweise des Glycerins, die die Expansion unterdrücken, ist deren zusätzlicher Weichmacher-Effekt.

Als Folge der Herstellungsweise unter erhöhtem Druck und infolge des Einsatzes von teilweise mit Harzsäure(n)/ Fettsäure(n) und/oder Fetten/Ölen/Wachsen wenigstens teilimprägniertem Fasermaterial, werden diese Komponenten-zumindest teilweise - bevorzugt an die Aussenseite der Matrix gepresst. Dabei bildet sich eine Oberflächenschicht von bis zu 2 mm Tiefe, mit einer höheren Konzentration an Harzsäure (n)/Fettsäure (n) und gegebenenfalls Ölen/Fetten/Wachsen - vorzugsweise zur Oberfläche hin zunehmend - als im Inneren des Formkörpers. Dies bringt zusätzlich den Vorteil einer feuchteresistenten Aussenschicht mit sich, was auch angenehme Griff-Eigenschaften gewährleistet.

Infolge des Ausschaltens von Poren, Lunkern u.dgl. und der hohen Nach- und Letztverarbeitungsdrücke bei der Fertigung werden hohe Dichtewerte von beispielsweise 1.05-1.25 t/m³ und damit hohe mechanische Stabilitätswerte erreicht, welche sogar eine Fertigung von hoch beanspruchbaren Gelenkelementen, z.B. für Möbel oder Gebrauchsgegenstände, ermöglichen. Infolge des Gehalts an Fetten, Ölen und/oder Wachsen in der Aussenschicht kann sogar ein Selbstschmierungseffekt solcher Gelenke erreicht werden.

In besonders vorteilhafter Weise - und dies insbesondere im Hinblick auf die immer vehementer geforderte Wirtschaftlichkeit in den hier in Rede stehenden Wirtschafts- und Produktionsbranchen - weist das neue Material ausgezeichnete, dem Holz analoge Be- und Verarbeitbarkeit und Kombinierbarkeit auf. Damit ist eine hohe Auslastung des Maschinenparks der Holzbearbeitung und - verarbeitung und der entsprechenden Fertigungstechnologie gegeben, sodass ein Einsatz artfremder Fertigungs-Infrastruktur, die z.B. auf Thermoplastizität, mangelnde Haftung von Klebeverbindungen, Aufschmelzen u.dgl. eingestellt ist, vermieden werden kann.

Die erfindungsgemässen Formkörper sind sowohl nichtspanabhebender Bearbeitung, wie etwa Lackieren, Beschichten, oder weiterer thermoplastischer Verformung zugänglich, als auch im wesentlichen quasi-thermoplastischer und gleichzeitig spanabhebender Bearbeitung. Zudem sind sie frei von den Nachteilen bzw. Schwächen thermoplastischer Materialien in Bezug auf Verkleben oder Verschmieren von Werkzeugen (Schleifpapier, Sägen, Feilen u.dgl.). Gleichzeitig ist die Staubbelastung bei spanabhebender Bearbeitung wesentlich geringer als bei Holz oder üblichen Holz-Werkstoffen.

Gemäss einer bevorzugten Ausführungform weisen die erfindungsgemässen Formkörper - auch nach umformender und/oder materialabtragender Bearbeitung - einen seidigglatten Griff auf, wodurch das konsumentenfreundliche und griffsympathische Material insbesondere auch für eine ökonomische Fertigung von hochstabilem, verschleissarmem und für die Gesundheit unbedenklichem Spielzeug geradezu prädestiniert ist.

Was nun die Herstellung der neuartigen Formkörper betrifft, so erfolgt diese in besonders bevorzugter Weise in zwei Verfahrensstufen: eine Extrusions- und Zerteilungsstufe zur Erzeugung von Vor-Formkörpern, z.B. in Granulatform, und eine thermoplastische Umformungsstufe, z.B. Spritzguss, zur Herstellung der gewünschten Formkörper, die sich dann vor allem durch ihre homogene Form mit statistisch gleichmässig verteilten Partikeln des Fasermaterials in der Matrix auszeichnen, wobei im Zuge dieses Verfahrens durch erhöhten Druck und erhöhte Temperatur auch ein gel-schmelzeartiger Zustand der Matrix in einem Übergangsstadium auftritt.

Die 1. Verfahrensstufe verhindert jegliche, die Homogenität des Endproduktes störende, Entmischung der doch recht unterschiedlichen Komponenten und erleichtert die Beschickung der 2. Verfahrensstufe, z.B. einer Spritzgiesseinrichtung, wesentlich. Die Beschickung der 2. Verfahrensstufe muss dabei jedoch nicht unmittelbar an die 1. Verfahrensstufe anschliessen, sondern kann gegebenenfalls auch nach einer Zwischenlagerung und/oder Konditionierung (z.B. Einstellen der Gesamtfeuchte, Beaufschlagen mit einem Additiv) und/oder nach einem Transport der Vor-Formkörper erfolgen.

Werden besondere Anforderungen an Grösse, Gestalt und/oder die mechanische Stabilität gestellt, ist es vorteilhaft, die thermoplastische Umformung der zweiten Verfahrensstufe ebenfalls durch Extrusion oder durch Pressverfahren vorzunehmen. In diesem Falle lassen sich mechanisch feste, hoch beanspruchbare Formkörper in Form von Verbundkörpern, insbesondere als Mehrschicht- oder Laminatkörper, herstellen, wobei der Materialschluss bevorzugt auf flächiger Eigenmateriab-Thermoplast-Schweissung beruht.

Neben der Harzsäurekomponente, welche überraschenderweise die holzartigen Eigenschaften des neuen Werkstoffes günstig beeinflusst - und im übrigen auch teilweise aus den eingesetzten Holzpartikeln selbst stammen kann - ist es für die Kompaktheit des neuen Produktes von entscheidender Bedeutung, bei der Fertigung allfällige Expansion und Porenbildung möglichst vollständig hintanzuhalten, wobei entsprechende Fertigungsbedingungen und Expansions-Unterdrücker eine besondere Hilfestellung bieten.

So ist es z.B. günstig, durch Erhöhung des Gesamtquerschnittes des Düsenaustritts bei der Extrusion in der 1. Verfahrensstufe die Austrittsgeschwindigkeit und damit auch die Scherbelastung zu senken, wodurch eine Expansion im Vor-Formkörper bzw. Granulat-Stadium verhindert wird.

Darüber hinaus werden bei Einsatz von Holz als Fasermaterial infolge der Druck- und Temperaturbelastung Inhaltsstoffe des Holzes herausgepresst oder -gelöst, dringen in die Gelmasse bzw. -Matrix ein und erhöhen dort deren Qualität, wie insbesondere die Wasserfestigkeit, die Resistenz gegen Mikroorganismen und auch deren mechanische Stabilität. Derartige Inhaltsstoffe können Lignine, Hemicellulosen, Gerbstoffe, Fette oder Öle, Farbmittel, und insbesondere auch Harze sein.

Hohe Kompaktheit und Porenfreiheit lassen sich in besonders vorteilhafter Weise dadurch erzielen, dass einerseits die Extrusion der Vor-Formkörper, beispielsweise eines Granulates, in der ersten Verfahrensstufe bei Temperaturen im Bereich von 70-135 Grad Celsius, insbesondere von 100-125 °C, und bei Drücken von 20-100 bar, insbesondere von 25-80 bar, und andererseits die Spritzgussverarbeitung der zweiten Verfahrensstufe bei Temperaturen von 110-210 °C, insbesondere von 150-180°C und bei Drücken von 250-1200 bar, insbesondere von 400-700 bar, vorgenommen wird.

Darüber hinaus kann eine Verfahrensweise mit Zusätzen, welche die Expansion unterdrücken, wie beispielsweise Glycerin, Glykol oder Polyoxyalkylenglykol, ebenfalls besonders günstig sein, wobei gerade Polyole in synergistischer Weise zusätzlich einen Weichmacher-Effekt einbringen. Diese Zusätze können in einer Konzentration von 0.5-12 Gew.%, insbesondere 2-8 Gew.%, jeweils bezogen auf die Gesamtmasse, der Grundmasse beigemengt werden.

Eine erhöhte und erweiterte Nutzungs- und Gebrauchspalette der neuartigen Formkörper kann durch weitere Zusätze zur Erhöhung der Wasserfestigkeit, insbesondere aus der Gruppe der - vorzugsweise biogenen - Harze und Kautschuke, problemlos sichergestellt werden.

Wird eine Modifikation und/oder Verfestigung der Stärke/Protein-Matrix angestrebt, kann in vorteilhafter Weise der Zusatz von Stärke-Modifikatoren, insbesondere Verätherungs- und/oder Veresterungskomponenten, und/oder von Protein-Modifikatoren, insbesondere in Form von pH-Einstellungs- und Gerbmitteln, erfolgen.

Als besonders wirksame Massnahme zur Sicherung der Porenfreiheit ist eine Entgasung der Faserkomponente selbst, insbesondere Holz, günstig, weil dadurch bei der erfindungsgemässen 2-Stufen-Verfahrensweise diese Gasentwicklungsquelle von vornherein ausgeschaltet wird und man sich voll auf die Expansions-Repression der Matrix bzw. Grundmasse konzentrieren kann. Eine solche Entgasung kann beispielsweise im Zuge der Erhitzung des pflanzlichen Fasermaterials vor der Einbringung in die 1. Verfahrensstufe auf Temperaturen von 170-220°C, insbesondere von 180-190°C, stattfinden.

Wenn man in einer ebenfalls bevorzugten Weise das pflanzliche Fasermaterial im noch erhitzten Zustand zumindest mit einer (schmelze-)flüssigen Komponente, insbesondere mit der Öl- oder Fettkomponente, vorzugsweise mit gehärtetem Pflanzenfett oder härtenden Ölen, zumindest teilweise tränkt oder imprägniert und vorzugsweise im noch erhitzten Zustand in die 1. Verfahrensstufe einbringt, dann ist neben einer nicht unerheblichen Energieeinsparung der Effekt einer stärkeren Durchtränkung der Faserkomponente gegeben, was zu einem besonders gleichmässigen, verzögerten Austreten der Substanzen aus den Holzpartikeln in die Matrix führt und wesentliche Eigenschaftsverbesserungen bringt.

Für verschiedene Anwendungszwecke kann es auch von Vorteil sein, die fertig extrudierten Formkörper-Granulate der 1. Verfahrensstufe mit Glycerin nachträglich zu beaufschlagen, sodass - nach entsprechender Lagerzeit, vorzugsweise nach einem Tag - die Granulate vom expansionsunterdrückenden Glycerin durchdrungen sind, wodurch sich bei thermoplastischer Weiterverarbeitung besonders kompakte, weitestgehend porenfreie Formkörper ergeben.

In einer besonders bevorzugten Ausführungsform wird zur Mischung der erfindungsgemässen Grundkomponenten zusätzlich noch ein natürliches, modifiziertes Harz, z.B. Diethylenglykol-Abietinsäureester, zugesetzt. Neben dessen Emulgatorfunktion ist aber auch insbesondere dessen feuchtigkeitsunabhängige Weichmacher-Eigenschaft von Vorteil. Dieser Effekt bewirkt eine grössere Unabhängigkeit der Oberflächengüte der fertigen Formkörper von bestimmten äusseren Einflüssen, wie insbesondere Schwankungen der Luftfeuchtigkeit.

Schliesslich lassen sich die erfindungsgemäss erhaltenen neuen Formkörper für verschiedenste Zwecke vorteilhaft einsetzen, beispielsweise als Elemente des Fahrzeug-, Holz- und Möbelbaues, insbesondere für Leisten, Zierleisten, Kanten, Profile, Blenden, Knöpfe, Griffe, Zapfen, Haken, Gelenke, Bänder, Verbindungs- und Verankerungselemente, Möbelbeine, Gehäuse, Zubehörteile, Armaturenbretter, Verkleidungen, Spielzeug, Edelhausrat, Verpackungsmaterial und dergleichen.

An Hand der folgenden Beispiele wird die Erfindung näher erläutert:

### Beispiel 1:

### Verfahrensstufe 1:

### Zusammensetzung der zur Herstellung der Vor-Formkörper (z.B. Granulate) vorgesehenen Formmasse

| Gew.% | Komponente |
|---|---|
| 58.47 | Holzspäne (z.B. Deckschichtspäne aus der Spanplattenherstellung) |
| 23.39 | Maismehl feinst gemahlen (mittlere Partikelgrösse von 0.4 - 0.8 mm) |
| 10.55 | Harzsäure (Sacocell 309, Fa. Krems Chemie) |
| 2.92 | gehärtetes Pflanzenfett, Schmelztemperatur: 45°C |
| 2.92 | Glycerin |
| 1.75 | rasch trocknendes Leinöl |

100 kg längliche Holzspäne der Dimension 0.2 - 5 mm werden in einem beheizbaren Mischer mit 5 kg gehärtetem Pflanzenfett bei 65°C innig vermischt, sodass das Holz das schmelz-flüssige Fett restlos absorbiert.

Anschliessend werden 40 kg feinstes Maismehl mit einem Eigen-Fettgehalt von 2.5 Gew.% eingemischt.

Diese trockene Mischung wird in einen Extruder eindosiert, wobei an verschiedenen Stellen des Extrudergehäuses die verschiedenen Flüssigkeiten bzw. Flüssigphasen zudosiert werden.
Kurz nach dem Einzug werden die in Wasser emulgierte Harzsäure-Komponente (Sacocell 309 ist ein Abietinsäure-Derivat) mit einem Feststoffgehalt von 50 Gew.%, in der Mitte das Glycerin und vor der letzten Mischzone das Leinöl eingebracht.

Es wird so extrudiert und zerteilt, dass Granulate der Dimension von ca. 2.5-3 mm entstehen und die Expansion durch geringe Massetemperatur, geringen Druck und grosse freie Düsenfläche (grössere Anzahl von Düsenlöchern) verhindert wird.
Extruder: CM 45 Cincinnati Milacron
Schneckenvariante: Typ SK 400
Düse: 20 Rundlöcher der Dimension 2.5 mm

Extrusionsbedingungen:
Schneckendrehzahl: 70 U/min
Durchsatz: 103 kg/h
Drehmoment: 30 % (SME ca. 0.05 kWh/kg)
Massedruck: 30 bar
Massetemperatur: 105 Grad Celsius
Granulation im Düsenschnittverfahren zu kugelförmigem Granulat.

Das so erhaltene Granulat wird durch Einstellen der Luftfeuchte auf einen Gesamtwassergehalt von 14 Gew.% konditioniert und in diesem Zustand an eine Spritzgussanlage zur Weiterverarbeitung abgegeben.

### Verfahrensstufe 2:

Spritzgussanlage: Fa. Engel, ES 330/80 HL Die Spritzgussanlage wird so betrieben, dass der Einzugsteil kühl (etwa 30 °C) gehalten wird und die Massetemperatur bei der Spritzgussverarbeitung 165 °C nicht überschreitet. Die Spritzgussform wird intensiv gekühlt, sodass auch bei geringen Zykluszeiten 20 °C nicht überschritten werden.

Durch grössere Anspritzquerschnitte und geringere Einspritzgeschwindigkeiten in der ersten Phase des Einspritzvorganges wird eine Expansion verhindert bzw. unterdrückt.

Ein hoher Enddruck bei der Spritzgussverarbeitung bewirkt ein Austreten der Fettkomponente aus dem Holzanteil und in Verbindung mit der kalten Form eine problemlose Formtrennung. Die so erhaltenen Werkstücke (Zylinder von 5 cm Höhe und 4 mm Durchmesser, etwa eschenfarbig) haben eine glatte Oberfläche, wobei der Holzanteil teilweise sichtbar ist.

Die Eigenschaften der so erhaltenen Formkörper sind denen von Holz sehr ähnlich und können durch herkömmliche Holzbearbeitungsmethoden wie Bohren, Sägen, Schleifen, Schnitzen, Schneiden, Leimen, Dübeln, Schrauben, Lackieren, Beschichten usw. finalisiert werden. Speziell das Angreifverhalten ist dem von Holz sehr ähnlich und unterscheidet sich daher in angenehmer Weise von jenem von Kunststoff.

Deutliche Unterschiede zu Holz ergeben sich in der hohen Dichte (0.8 - 1.25 t/m³) und im isotropen Aufbau. Die Wasserbeständigkeit ist ohne Oberflächenbehandlung nur unwesentlich geringer als bei Holzformteilen. Die mechanischen Eigenschaften, insbesondere Festigkeiten, sind mit denen von Holz vergleichbar, hingegen fehlen jegliche Einschränkungen infolge von Jahresringen oder Aststellen.

Die Oberflächenhärte der neuen Formteile in der oben beschriebenen Zusammensetzung entspricht derjenigen von handelsüblichem Hart-PVC. Die Bearbeitbarkeit entspricht jener von Holz, jedoch ohne die Nachteile thermoplastifizierbarer Kunststoffe wie z.B. das Verkleben und Verschmieren von Werkzeugen (Schleifpapier, Sägen, Feilen, Bohrer, u.dgl.). Gleichzeitig ist die Staubbelastung bei spanabhebender Bearbeitung wesentlich geringer als bei Holz oder üblichen Holz-Werkstoffen.

### Beispiel 2

### Verfahrensstufe 1:

### Zusammensetzung der für die Herstellung eines Vor-Formkörper-Granulates vorgesehenen Formmasse:

| Gew.% | Komponente: |
|---|---|
| 50.95 | kompaktierter, recyklierter, rieselfähiger Zellstoff |
| 25.40 | feinst gemahlenes Reismehl (mittlere Partikelgrösse 0.4 bis 0.8 mm) |
| 12.70 | Harzsäure (Sacocell 309, Fa. Krems Chemie) |
| 6.85 | Leinöl 90P (Fa. Lechner & Crebert) |
| 4.11 | Glycerin |

Das gesamte Leinöl wird - unterschiedlich zu Beispiel 1 - dem recyclierten Zellstoff bei Raumtemperatur untergemischt, wobei auch die Einmischung des Reismehls erfolgt. Kurz nach dem Einzug erfolgt die Einbringung der Harzsäure-Komponente (Sacocell 309 ist ein Abietinsäure-Derivat) in wässriger Emulsion mit einem Feststoffgehalt von 50 Gew.%, in der Mitte jene des Glycerins, der Einzug einer Komponente kurz vor der letzten Mischzone entfällt. Sonst wird analog zu Beispiel 1 gearbeitet, auch was die Verfahrensstufe 2 betrifft.

Die erhaltenen Granulate bzw. Vor-Formkörper sind im Gegensatz zu jenen gemäss Beispiel 1 nicht durch Holzinhaltsstoffe bräunlich gefärbt. Sie können durch entsprechende Zusätze farblich beliebig gestaltet werden.

Die mechanischen Eigenschaften sind gegenüber den gemäss Beispiel 1 erhaltenen Formkörpern verbessert und übertreffen Holz in einigen Bereichen beträchtlich, z.B. ist die Druckfestigkeit wesentlich erhöht.

Lediglich die Wasserbeständigkeit ist ohne Oberflächenbehandlung etwas geringer, was aber die biologische Abbaubarkeit bei geeigneten Umgebungsbedingungen, z.B. bei Kompostierung, fördert.

### Beispiel 3

### Verfahrensstufe 1:

### Zusammensetzung der für eine Herstellung eines Vor-Formkörper-Granulates vorgesehenen Formmasse:

| Gew.% | Komponente: |
|---|---|
| 56.60 | rieselfähige Zellulosefasern |
| 12.58 | Kartoffelstärke |
| 12.58 | Knochenleim |
| 9.44 | Harzsäure (Sacocell 309) |
| 3.77 | Äthylenglykol |
| 3.77 | Leinöl 90P (Fa. Lechner & Crebert) |
| 1.26 | Glutaraldehyd |

Wie in Beispiel 1 beschrieben werden die Zellulosefasern mit Leinöl beladen; anschliessend werden Knochenleim und Kartoffelstärke untergemischt, und die Trockenmischung wird in den Extruder dosiert. Harzsäure, Glykol und Glutaraldehyd werden in das Extrudergehäuse an unterschiedlichen Stellen eingebracht, wobei Glutaraldehyd vor der letzten Mischzone kurz vor dem Extruderaustritt beigegeben wird.

### Verfahrensstufe 2:

Das aus Verfahrensstufe 1 erhaltene Vor-Formkörper-Granulat wird unter den aus Beispiel 1 bekannten Bedingungen an der Spritzgussanlage verarbeitet.

Durch das in den Zellulosefasern gespeicherte Leinöl, das durch den grossen Spritzdruck zum Teil ausgepresst wird, kann, wie schon bei den vorhergehenden Beispielen beschrieben, die Formtrennung ohne Schwierigkeiten erfolgen. Der eingesetzte Glutaraldehyd denaturiert den Knochenleim, sodass die Werkstücke wasserfest gehärtet werden. Dies hat den Vorteil, dass die so erhaltenen Formkörper auch ohne Oberflächenbehandlung völlig wasserresistent ausgebildet sind. Der biologische Abbau unter Kompostbedingungen findet dann allerdings verzögert statt.

### Beispiel 4 (Vergleichsbeispiel)

Es wird ähnlich wie in Beispiel 2 verfahren, mit folgender Rezeptur:

| Gew.% | Komponente |
|---|---|
| 48.31 | Holzspäne |
| 32.24 | Maisgries |
| 10.49 | Harzsäure (Sacocell 309) |
| 4.76 | Glycerin |
| 4.20 | Leinöl |

Der Leinölanteil ist für Holzspäne als Fasermaterial unangenehm hoch, sodass an der Oberfläche des erhaltenen Werkstückes Ölausscheidungen zu beobachten waren. Die obere Grenze an Leinöl wurde bei dieser Rezeptur offenbar überschritten.

### Beispiel 5 (Vergleichsbeispiel)

Es wird ähnlich wie in Beispiel 2 verfahren, mit folgender Rezeptur:

| Gew.% | Komponente |
|---|---|
| 56.47 | Holzspäne |
| 24.22 | Maisgries |
| 12.28 | Harzsäure (Sacotan 85, Fa. Krems Chemie) |
| 4.76 | Glycerin |
| 2.27 | Leinöl |

Sacotan 85 ist ein Harzsäure-Derivat mit niedrigem Schmelzpunkt. Das in diesem Beispiel eingesetzte Glycerin ist ein Rohglycerin aus Raps-Methylester(RME)-Anlagen. Mit dieser Zusammensetzung wurde erneut ein höherer Holzfaseranteil bei gleichzeitig vermindertem Stärke-Anteil untersucht. Es zeigte sich, dass sowohl das Herstellen von Vor-Formkörper-Granulaten als auch der spritzgussgefertigten Formkörper problemlos vonstatten ging. Eine obere Grenze für den Holzanteil in der Endmischung ist damit noch nicht annähernd erreicht.

### Beispiel 6

Es wird ähnlich wie in Beispiel 2 verfahren, mit folgender Rezeptur:

| Gew.% | Komponente |
|---|---|
| 49.03 | Stroh |
| 32.74 | Maisgriess |
| 11.52 | Harzsäure (Sacotan 85) |
| 4.76 | Glycerin |
| 1.95 | Leinöl |

Die Vor-Formkörper bzw. Vor-Formkörper-Granulate lassen sich problemlos herstellen. Lediglich die mit dieser Mischung erhaltene mechanische Stabilität und Festigkeit der Formkörper ist etwas vermindert.

### Beispiel 7

Es wird ähnlich wie in Beispiel 2 verfahren, mit folgender Rezeptur:

| Gew.% | Komponente |
|---|---|
| 49.42 | Holzspäne |
| 32.95 | Maisgries |
| 9.61 | Harzsäure (Sacocell 309) |
| 4.76 | Glycerin |
| 1.63 | Leinöl |
| 1.63 | natürl. modifiziertes Harz ("Weich-Harz", Fa. Krems Chemie) |

Im Unterschied zu Beispiel 2 waren die Extrusionsbedingungen in der 1. Verfahrensstufe derart verändert, dass die Massetemperatur bei rund 115 °C lag. Dies bewirkte einen besseren Aufschluss der Stärkekomponente und in der Folge ein verbessertes Fliessen der Formmasse bei der Spritzgussverarbeitung in der 2. Verfahrensstufe. Das Expansionsverhalten war dabei etwas schwerer zu beherrschen.

Zusätzlich zu den bewährten Komponenten aus Beispiel 2 wurden Harzsäuren aus natürlichem, modifiziertem Harz in die Rezeptur mit eingebunden. Polyol-Abietinsäureester, wie beispielsweise das verwendete "Weich-Harz" der Fa. Krems Chemie, welches im wesentlichen Diethylenglykol-Abietinsäureester enthält, sollten als zusätzliche - und gegenüber Glycerin vor allem wesentlich weniger feuchtigkeitsabhängige - Weichmacher und als Emulgatoren für höhere Leinölgaben dienen.

Die Unterschiede zu den Formkörpern nach Beispiel 2 waren eher gering. Die Auswirkungen von natürlichem, modifiziertem Harz als Emulgator kommen erst bei höheren Leinölgaben voll zur Wirkung.

### Beispiel 8

Es wird ähnlich wie in Beispiel 2 verfahren, mit folgender Rezeptur:

| Gew.% | Komponente |
|---|---|
| 50.28 | Holzspäne |
| 33.55 | Maisgries |
| 9.74 | Harzsäure (Sumatra Dammar, Fa. Worlee) |
| 4.76 | Glycerin |
| 1.67 | Leinöl |

Diese Mischung wurde gewählt, um die Auswirkungen eines nicht derivatisierten natürlichen Hart-Harzes zu erproben. Das feste Hart-Harz wurde in gemahlener Form der Trockenmischung beigegeben.

Neben kleinerer Probleme am Extrudereinzug war auch die Formtrennung der fertigen Spritzguss-Formkörper weniger gut als erwartet. Aufgrund dieser Erfahrungen scheint der Einsatz von aufbereiteten Naturharzen oder deren Harzsäuren wegen der doch besser definierten Eigenschaften zweckmässiger zu sein.

### Beispiel 9 (Vergleichsbeispiel)

Es wird ähnlich wie in Beispiel 2 verfahren, mit folgender Rezeptur:

| Gew.% | Komponente |
|---|---|
| 57.14 | Holzspäne |
| 38.10 | Maisgries |
| 4.76 | Glycerin |

Aus dieser Mischung konnten unter erfindungsgemässen Normalbedingungen keine Formkörper hergestellt werden. Das ungenügende Fliessverhalten der Formmasse liess eine ordentliche Füllung der Spritzgussform nicht zu. Die Formtrennung der nicht vollständig ausgebildeten Formkörper war nicht akzeptabel. Der Zusatz von Harzsäuren und/oder Fettsäuren (beide Komponenten sind beispielsweise in Tallöl enthalten) stellt also einen unverzichtbaren Rezepturbestandteil dar.

### Beispiel 10 (Vergleichsbeispiel)

Es wird ähnlich wie in Beispiel 2 verfahren, mit folgender Rezeptur:

| Gew.% | Komponente |
|---|---|
| 50.96 | Holzspäne |
| 33.98 | Maisgries |
| 10.30 | Harzsäure (Sacocell 309) |
| 4.76 | Glycerin |

Die Granulate der Vor-Formkörper lassen sich problemlos herstellen. Die Formtrennung an der Spritzgussmaschine ist hingegen schlecht bis unakzeptabel. Es treten auch unerwünschte Expansionen auf. Das Fehlen insbesondere der Ölkomponente wirkt sich dabei deutlich negativ aus.

### Beispiel 11 (Vergleichsbeispiel)

Es wird ähnlich wie in Beispiel 2 verfahren, mit folgender Rezeptur:

| Gew.% | Komponente |
|---|---|
| 47.50 | Holzspäne |
| 31.70 | Maisgries |
| 11.43 | Harzsäure (Sacocell 309) |
| 4.76 | Glycerin |
| 4.61 | NaCl |

Durch den Zusatz von NaCl wurden die Expansionsvorgänge zwar abgeschwächt, aber nicht vollständig eliminiert. Aufgrund des fehlenden Leinöls war überdies die Formtrennung schlecht. Für eine wirksame Expansionsunterdrückung müssen bei einer derartigen Mischung die Konzentrationen der die Expansion unterdrückenden Zusätze erhöht und/oder noch weitere hinzugefügt werden.

### Beispiel 12

Eine besonders bevorzugte Ausführungsform der vorliegenden Erfindung enthält:

| Gew.% | Komponente |
|---|---|
| 50.5 | Holzspäne (0.05-35 mm Länge, 0.05-3 mm Dicke) |
| 28.0 | feines Maismehl |
| 10.8 | Harzsäure (Sacocell 309) |
| 6.9 | Glycerin |
| 1.9 | Leinöl |
| 1.9 | natürl. modifiziertes Harz ("Weich-Harz", Fa. Krems Chemie) |

Es wird ähnlich wie in Beispiel 2 verfahren, mit folgenden Abweichungen:
das gesamte Leinöl und das "Weich-Harz" (Diethylenglykol-Abietinsäureester) werden den Holzspänen bei Raumtemperatur untergemischt, wobei auch die Einmischung des Maismehls erfolgt. Kurz nach dem Einzug der Masse in den Extruder wird die Harzsäure-Komponente (Sacocell 309) in wässeriger Emulsion in den Extruder gepumpt.
Die nach dem Extrusionsvorgang erhaltenen Vor-Formkörper-Granulate werden auf einen Gesamtwassergehalt von 5 Gew.% getrocknet und anschliessend mit der entsprechenden Menge Glycerin beaufschlagt, wobei dieses Glycerin innerhalb weniger Stunden von den Granulaten vollständig resorbiert wird.

In der zweiten Verfahrensstufe kann die Masse bei einer Temperatur von 110-200°C verarbeitet werden, vorzugsweise jedoch zwischen 150-170°C. Die Spritzgussform wird - im Gegensatz zu den vorhergehenden Beispielen - nicht gekühlt, sondern auf maximal 90°C, vorzugsweise 80°C, temperiert, wobei dank der gewählten Rezeptur und Verarbeitungsweise dennoch eine tadellose Formtrennung erfolgt.
Die Einspritzgeschwindigkeit kann innerhalb eines relativ breiten Bereiches ohne Qualitätsverlust frei gewählt werden, das Verfahren hat sich gegenüber verschiedenen Einspritzgeschwindigkeiten als stabil und robust erwiesen. Es empfiehlt sich jedoch die Einstellung eines höheren Nachdruckes im Rahmen der Schliesskraftverhältnisse, um eventuell auftretende Teilexpansionen beim Einspritzen wieder zu eliminieren.

Die Temperierung auf max. 90°C hat deutlich positive Auswirkungen auf die Oberflächengüte und die mechanische Festigkeit der Formkörper im Vergleich zu jenen aus den vorangegangenen Beispielen gezeigt.

## Patentansprüche

1. Thermoplastischer Formkörper auf Basis einer Formmasse aus Partikeln mindestens eines pflanzlichen Fasermaterials, welche in eine - bei erhöhter Temperatur und erhöhtem Druck in einen gel-schmelzeartigen Zustand überführten - Matrix aus mindestens einem gelschmelzebildenden Bio-Polymer eingebettet sind, sowie weiteren Zusätzen, dadurch gekennzeichnet, dass er
a) in einer unter expansionsunterdrückenden Bedingungen erzeugten Form vorliegt und im wesentlichen frei von Poren ist,
b) einen Gesamtwassergehalt von 3 bis 18, vorzugsweise von 4 bis 12 Gew.% aufweist, und
c) die Partikel des pflanzlichen Fasermaterials eine Länge von 0.05 bis 35 mm aufweisen und von mindestens einer Harzsäurekomponente-gegebenenfalls im Gemisch mit einer Fettsäure - zumindest teilweise durchtränkt sind, wobei die Harzsäurekomponente aus der Gruppe folgender Substanzen stammt: Harzsäuren wie sie bei der Aufarbeitung von natürlichen Harzen anfallen; Harzsäurederivate; modifizierte, beispielsweise mit Polyolen veresterte Harzsäuren, insbesondere auf der Basis von Diterpenen und/oder Triterpenen; Hartharze, Weichharze (Balsame) und/oder Schleimharze, welche derartige Harzsäuren als Hauptkomponenten enthalten, beispielsweise Dammar, Kopale, Elemi, Gutti.

2. Formkörper nach Anspruch 1, dadurch gekennzeichnet, dass das pflanzliche Fasermaterial Holz und/oder Cellulose, vorzugsweise aus rezykliertem Fasermaterial, und das gel-schmelzebildende Biopolymer Stärke und/oder Protein enthält.

3. Formkörper nach Anspruch 1 oder 2, dadurch gekennzeichnet, dass die Harzsäure aus Tallöl und/oder natürlichen Harzen stammt.

4. Formkörper nach einem der vorhergehenden Ansprüche, dadurch gekennzeichnet, dass die Dicke des Fasermaterials 0.05-3 mm, vorzugsweise 0.1-1.5 mm beträgt.

5. Formkörper nach einem der vorhergehenden Ansprüche, dadurch gekennzeichnet, dass das Fasermaterial Holzpartikel enthält, deren Länge 0.15-35 mm, vorzugsweise 1-5 mm, und deren Dicke 0.05-3 mm, vorzugsweise 0.1-1.5 mm, beträgt.

6. Formkörper nach einem der vorhergehenden Ansprüche, dadurch gekennzeichnet, dass in der Matrix zusätzlich mindestens eine andere gel-schmelzebildende Komponente aus der Gruppe der Bio-Polymere, insbesondere der Lignine, Hemicellulosen, Dextrine, Pectine und/oder Chitine enthalten ist.

7. Formkörper nach einem der Ansprüche 1 bis 5, dadurch gekennzeichnet, dass in der Matrix anstelle von Stärke und/oder Protein mindestens eine andere gel-schmelze-bildende Komponente aus der Gruppe der Bio-Polymere, insbesondere der Lignine, Hemicellulosen, Dextrine, Pectine und/oder Chitine enthalten ist.

8. Formkörper nach einem der vorhergehenden Ansprüche, dadurch gekennzeichnet, dass als weiterer Zusatz mindestens ein Fett, Öl und/oder Wachs enthalten ist und vorzugsweise die Partikel damit zumindest teilweise durchtränkt sind.

9. Formkörper nach einem der vorhergehenden Ansprüche, dadurch gekennzeichnet, dass als weiterer Zusatz mindestens ein expansionsunterdrückendes Polyol, vorzugsweise Glycerin, und/oder expansionsunterdrückendes Salz, vorzugsweise NaCl, enthalten ist.

10. Formkörper nach einem der vorhergehenden Ansprüche, dadurch gekennzeichnet, dass folgende Komponenten in folgender Zusammensetzung enthalten sind:
| Gew.% | bevorzugte Gew.% | Komponente | bevorzugte Komponente |
|---|---|---|---|
| 40 - 80 | 48 - 60 | pflanzl. Fasermaterial | Holz, Cellulose |
| 15 - 45 | 20 - 35 | gel-schmelze-bildende Bio-Polymere | Stärken, Proteine |
| 2 - 15 | 5 - 10 | Harzsäure(n), ggf. Fettsäure(n) | aus Tallöl u./o. natürl. Harzen |
| 1 - 10 | 1.5 - 7 | Fette, Öle, Wachse | härtende Öle |
| 0.5 - 12 | 2 - 8 | expansionsunterdrücken-de Polyole, Salze | Glycerin |

11. Formkörper nach einem der vorhergehenden Ansprüche, dadurch gekennzeichnet, dass als weiterer Zusatz, jeweils bezogen auf die Gesamtmasse, 0.1 - 5 Gew.%, insbesondere 0.5 - 3 Gew.%, mindestens eines Stoffes aus der Gruppe der Farbmittel, Füllstoffe organischer oder anorganischer Herkunft, Gerbstoffe, Weichmacher, Biozide, und aushärtbaren Heisshärtungskomponenten, z.B. Aldehydharzen, enthalten sind.

12. Formkörper nach einem der vorhergehenden Ansprüche, dadurch gekennzeichnet, dass ausserdem zumindest eine die Wasserfestigkeit erhöhende Komponente aus der Gruppe der - bevorzugt biogenen - Harze und Kautschuke enthalten ist.

13. Formkörper nach einem der vorhergehenden Ansprüche, dadurch gekennzeichnet, dass ausserdem Stärke-Modifikatoren, insbesondere Verätherungs- und/oder Veresterungskomponenten, und/oder Proteinmodifikatoren, insbesondere in Form von pH-Einstellungs- und Gerbmitteln, enthalten sind.

14. Formkörper nach einem der vorhergehenden Ansprüche, dadurch gekennzeichnet, dass er eine Oberflächenschicht von bis zu etwa 2 mm Tiefe aufweist, in welcher, vorzugsweise zur Oberfläche hin zunehmend, eine höhere Konzentration an Harzsäuren - und gegebenenfalls Fetten, Ölen und/oder Wachsen - vorliegt als im Inneren des Formkörpers.

15. Formkörper nach einem der vorhergehenden Ansprüche, dadurch gekennzeichnet, dass er eine höhere Dichte als das in ihn integrierte pflanzliche Fasermaterial, insbesondere Holz, beispielsweise 0.8 - 1.25 t/m³, aufweist.

16. Formkörper nach einem der vorhergehenden Ansprüche, dadurch gekennzeichnet, dass er in im wesentlichen homogener Form mit statistisch gleichmässig verteilten Partikeln in der Matrix vorliegt.

17. Formkörper nach einem der vorhergehenden Ansprüche, dadurch gekennzeichnet, dass er in Form eines Verbundkörpers aus wenigstens zwei Formkörpern gemäss einem oder mehreren der Ansprüche 1-16, gegebenenfalls als Laminatkörper, vorliegt und die wenigstens zwei Formkörper mittels flächiger Eigenmaterial-Thermoplast-Schweissung miteinander verbunden sind.

18. Formkörper nach einem der vorhergehenden Ansprüche , dadurch gekennzeichnet, dass seine mechanischen Eigenschaften, insbesondere Festigkeiten, mit jenen von Holz vergleichbar sind, während seine Oberflächenhärte vorzugsweise derjenigen von Hart-PVC entspricht.

19. Verfahren zur Herstellung eines Formkörpers auf der Basis von pflanzlichem Fasermaterial mit Stärke und/oder Protein in der Matrix, dadurch gekennzeichnet, dass eine Formmasse bestehend aus einer Matrix mit Stärke und/oder Protein, pflanzlichem Fasermaterial in Form von Partikeln mit 0.05 bis 35 mm Länge, mindestens einer Harzsäure und 3 bis 18 Gew.% Wasser, sowie weiteren Zusätzen hergestellt wird, aus welcher - unter zumindest teilweiser Tränkung des Fasermaterials mit der Harzsäure und gegebenenfalls mit weiteren Komponenten - bei erhöhter Temperatur und erhöhtem Druck durch einen mindestens einstufigen Mischungs- und Verdichtungsvorgang unter expansionsunterdrückenden Bedingungen eine Gel-Schmelze gebildet wird und daraus im wesentlichen porenfreie Formkörper erzeugt werden.

20. Verfahren nach Anspruch 19, dadurch gekennzeichnet, dass die Formkörper in Form eines Granulates erzeugt werden.

21. Verfahren nach Anspruch 19 oder 20, dadurch gekennzeichnet, dass wenigstens zwei, vorzugsweise eine Vielzahl von Formkörpern - gegebenenfalls nach Zwischenlagerung und/oder Konditionierung und/oder Transport - in mindestens einer weiteren Verfahrensstufe in Formkörper gewünschter Gestalt und Dimension umgeformt werden.

22. Verfahren nach Anspruch 21, dadurch gekennzeichnet, dass die Formkörper in der mindestens einen weiteren Verfahrensstufe unter hohem Druck und gleichzeitiger Unterdrückung von Expansionsvorgängen, insbesondere durch einen mindestens einstufigen Extrusions- oder Spritzgussprozess, umgeformt werden.

23. Verfahren nach einem der Ansprüche 19 bis 22, dadurch gekennzeichnet, dass
40-80 Gew.%, vorzugsweise 48-60 Gew.%, gegebenenfalls recycliertes, Fasermaterial, vorzugsweise auf Holz- und/oder Cellulosebasis;
15-45 Gew.%, vorzugsweise 20-35 Gew.%, mindestens eines biogenen Materials aus der Gruppe der Bio-Polymere, vorzugsweise der Stärken, Proteine, Lignine, Hemicellulosen, Dextrine, Pektine und/oder Chitine, insbesondere Stärken bzw. Stärke in überwiegendem Ausmass enthaltenden Zerealien, gegebenenfalls in Mischung mit Protein;
2-15 Gew.%, insbesondere 5-10 Gew.%, mindestens einer Harzsäure, gegebenenfalls in Mischung mit mindestens einer Fettsäure, vorzugsweise aus Tallöl oder natürlichen Harzen, gegebenenfalls als wässerige Emulsion;
1-10 Gew.%, insbesondere 1.5-7 Gew.%, mindestens eines Fettes, vorzugsweise trocknenden Öls und/oder Wachses und
0.5-12 Gew.%, insbesondere 2-8 Gew.%, mindestens einer die Expansion unterdrückenden Komponente aus der Gruppe der mehrwertigen Alkohole und Salze;
als Bestandteile der Formmasse, deren Gesamt-Wassergehalt, bezogen auf die Masse aller Komponenten, 3 - 18 Gew.%, insbesondere 4-12 Gew.%, beträgt, dem Mischungs- und Verdichtungsvorgang unterzogen werden.

24. Verfahren nach einem der Ansprüche 19 bis 23 , dadurch gekennzeichnet, dass das Fasermaterial der Formkörper ausserdem zumindest teilweise mit einer Fettsäure- und/oder Fett/Öl/ Wachs-Komponente getränkt wird.

25. Verfahren nach einem der Ansprüche 21 bis 24, dadurch gekennzeichnet, dass der Druck auf bis zu 1200 bar eingestellt wird.

26. Verfahren nach einem der Ansprüche 21 bis 25, dadurch gekennzeichnet, dass in der mindestens einen weiteren Verfahrensstufe mindestens zwei Formkörper bei erhöhtem Druck und erhöhter Temperatur, insbesondere durch materialeigene Thermoplast-Schweissung, gegebenenfalls unter Bildung eines Mehrschicht- bzw. Laminatkörpers, aneinander gebunden werden.

27. Verfahren nach einem der Ansprüche 21 bis 26, dadurch gekennzeichnet, dass die Formkörper in der mindestens einen weiteren Verfahrensstufe mindestens einer thermoplastischen und/oder mindestens einer, vorzugsweise mittels üblicher Holzbearbeitungsgeräte oder Holzbearbeitungsverfahren durchführbaren, spanabhebenden und/oder nicht-spanabhebenden Bearbeitung unterzogen werden.

28. Verfahren nach Anspruch 19 oder 20, dadurch gekennzeichnet, dass der Mischungs- und Verdichtungsvorgang bei Temperaturen im Bereich von 70-135°C, insbesondere von 100-125°C, und bei Drücken von 20-100 bar, insbesondere von 25-80 bar, vorgenommen wird.

29. Verfahren nach einem der Ansprüche 21 bis 28, dadurch gekennzeichnet, dass in der mindestens einen weiteren Verfahrensstufe eine Spritzgussverarbeitung bei Temperaturen von 110-210°C, insbesondere von 150-180°C, und bei Drücken von 250-1200 bar, insbesondere von 400-700 bar, vorgenommen wird.

30. Verfahren nach einem der Ansprüche 19 bis 29, dadurch gekennzeichnet, dass in der ersten und/oder mindestens einer weiteren Verfahrensstufe Glycerin, Glykol, oder ein Polyoxyalkylenglykol und/oder ein expansionsunterdrückendes Salz, insbesondere NaCl, zur Unterdrückung von Expansionsvorgängen eingesetzt wird.

31. Verfahren nach einem der Ansprüche 19 bis 30, dadurch gekennzeichnet, dass der Matrix ausserdem, jeweils bezogen auf die Gesamtmasse, 0.1-5 Gew.%, insbesondere 0.5-3 Gew.%, mindestens eines Farbmittels, Füllstoffes organischer oder anorganischer Herkunft, Gerbstoffes, Weichmachers, Biozides und/oder einer Heisshärtungskomponente zugesetzt werden.

32. Verfahren nach einem der Ansprüche 19 bis 31, dadurch gekennzeichnet, dass der Matrix ausserdem Materialien zur Erhöhung der Wasserfestigkeit, vorzugsweise aus der Gruppe der - insbesondere biogenen - Harze und Kautschuke, zugesetzt werden.

33. Verfahren nach einem der Ansprüche 19 bis 32, dadurch gekennzeichnet, dass der Matrix ausserdem noch Modifikatoren für die Stärken, insbesondere Verätherungs- bzw.- Veresterungskomponenten, und/oder für die Proteine, insbesondere pH-Einstellungs- und Gerbmittel, zugesetzt werden.

34. Verfahren nach einem der Ansprüche 19 bis 33, dadurch gekennzeichnet, dass das pflanzliche Fasermaterial vor dem Mischungs- und Verdichtungsvorgang auf Temperaturen von 170- 220°C, insbesondere von 180-190°C, erhitzt wird.

35. Verfahren nach einem der Ansprüche 19 bis 34, dadurch gekennzeichnet, dass das pflanzliche Fasermaterial im noch erhitzten Zustand zumindest mit einer (schmelze-) flüssigen Komponente, vorzugsweise mit der Öl- oder Fettkomponente, insbesondere gehärtetem Pflanzenfett oder härtenden Ölen, zumindest teilweise getränkt wird.

36. Verfahren nach einem der Ansprüche 19 bis 35, dadurch gekennzeichnet, dass das pflanzliche Fasermaterial, gegebenenfalls in zumindest teilweise mit der Fett/Öl/Wachs-Komponente und/oder Harzsäure-Komponente getränkter Form, in erhitztem Zustand dem Mischungs- und Verdichtungsvorgang unterzogenwird.

37. Verfahren nach einem der Ansprüche 21 bis 36, dadurch gekennzeichnet, dass die Formkörper vor der Weiterbearbeitung in der mindestens einen weiteren Verfahrensstufe äusserlich mittels Polyol, vorzugsweise Glyzerin, behandelt werden.

38. Verwendung der Formkörper gemäss einem der Ansprüche 1-18 für Elemente des Fahrzeug-, Holz- und Möbelbaues - insbesondere für Leisten, Zierleisten, Kanten, Profile, Blenden, Knöpfe, Griffe, Zapfen, Haken, Gelenke, Bänder, Verbindungs- und Verankerungselemente, Möbelbeine, Gehäuse, Zubehörteile, Armaturenbretter, Verkleidungen, Spielzeug, Edelhausrat, Verpackungsmaterial und dergleichen.

## Claims

1. Thermoplastic moulding based on a moulding material comprising particles of at least one vegetable fibre material which are embedded in a matrix - converted into a gel-melt-like state at elevated temperature and elevated pressure - of at least one gel-melt-forming biopolymer, and further additives, characterized in that it
a) is present in a form produced under expansion-suppressing conditions and is essentially free of pores and
b) has a total water content of from 3 to 18, preferably from 4 to 12, % by weight, and
c) the particles of the vegetable fibre material have a length of from 0.05 to 35 mm and are at least partially impregnated with at least one resin acid component, optionally mixed with a fatty acid, the resin acid component originating from the group consisting of the following substances: resin acids as obtained in the working-up of natural resins; resin acid derivatives; resin acids which are modified, for example esterified with polyols, and in particular are based on diterpenes and/or triterpenes; hard resins, soft resins (balsams) and/or gum resins which contain such resin acids as main components, for example dammar, copals, elemi or gamboge.

2. Moulding according to Claim 1, characterized in that the vegetable fibre material contains wood and/or cellulose, preferably from recycled fibre material, and the gel-melt-forming biopolymer contains starch and/or protein.

3. Moulding according to Claim 1 or 2, characterized in that the resin acid originates from tall oil and/or natural resins.

4. Moulding according to any of the preceding Claims, characterized in that the thickness of the fibre material is 0.05-3 mm, preferably 0.1-1.5 mm.

5. Moulding according to any of the preceding Claims, characterized in that the fibre material contains wood particles whose length is 0.15-35 mm, preferably 1-5 mm, and whose thickness is 0.05-3 mm, preferably 0.1-1.5 mm.

6. Moulding according to any of the preceding Claims, characterized in that at least one other gel-melt-forming component from the group consisting of the biopolymers, in particular of the lignins, hemicelluloses, dextrins, pectins and/or chitins, is additionally contained in the matrix.

7. Moulding according to any of Claims 1 to 5, characterized in that at least one other gel-melt-forming component from the group consisting of the biopolymers, in particular of the lignins, hemicelluloses, dextrins, pectins and/or chitins is contained in the matrix instead of starch and/or protein.

8. Moulding according to any of the preceding Claims, characterized in that at least one fat, oil and/or wax is present as a further additive and preferably the particles are at least partially impregnated therewith.

9. Moulding according to any of the preceding Claims, characterized in that at least one expansion-suppressing polyol, preferably glycerol, and/or expansion-suppressing salt, preferably NaCl, is present as a further additive.

10. Moulding according to any of the preceding Claims, characterized in that the following components are present in the following composition:
| % by weight | Preferred % by weight | Component | Preferred component |
|---|---|---|---|
| 40 - 80 | 48 - 60 | Vegetable fibre material | Wood, cellulose |
| 15 - 45 | 20 - 35 | Gel-melt-forming biopolymers | Starches, proteins |
| 2 - 15 | 5 - 10 | Resin acid(s), optionally fatty acid(s) | from tall oil and/or natural resins |
| 1 - 10 | 1.5 - 7 | Fats oils, waxes | Hardening oils |
| 0.5 - 12 | 2 - 8 | Expansion-suppressing polyols, salts | Glycerol |

11. Moulding according to any of the preceding Claims, characterized in that 0.1 - 5% by weight, in particular 0.5 - 3% by weight, based in each case on the total mass of at least one substance from the group consisting of colorants, organic or inorganic fillers, tanning agents, plasticizers, biocides and heat-curable components, for example aldehyde resins, are present as a further additive.

12. Moulding according to any of the preceding Claims, characterized in that at least one component which increases the water resistance and originates from the group consisting of the - preferably biogenic - resins and rubbers is additionally present.

13. Moulding according to any of the preceding Claims, characterized in that starch modifiers, in particular etherification and/or esterification components, and/or protein modifiers, in particular in the form of pH adjusters and tanning agents, are additionally present.

14. Moulding according to any of the preceding Claims, characterized in that it has a surface layer of up to about 2 mm deep in which there is a higher concentration of resin acids - and optionally fats, oils and/or waxes - than in the interior of the moulding, preferably increasing towards the surface.

15. Moulding according to any of the preceding Claims, characterized in that it has a higher density than the vegetable fibre material, in particular wood, integrated in it, for example 0.8 - 1.25 t/m³.

16. Moulding according to any of the preceding Claims, characterized in that it is present in the matrix in essentially homogeneous form with statistically uniformly distributed particles.

17. Moulding according to any of the preceding Claims, characterized in that it is present in the form of a composite of at least two mouldings according to one or more of Claims 1-16, optionally as a laminate, and the two or more mouldings are bonded to one another by means of extensive thermoplastic welding of the material itself.

18. Moulding according to any of the preceding Claims, characterized in that its mechanical properties, in particular strengths, are comparable with those of wood, while its surface hardness preferably corresponds to that of rigid PVC.

19. Process for manufacturing a moulding based on vegetable fibre material with starch and/or protein in the matrix, characterized in that a moulding material consisting of a matrix with starch and/or protein. vegetable fibre material in the form of particles having a length of from 0.05 to 35 mm, at least one resin acid and from 3 to 18% by weight of water and further additives is prepared, from which moulding material a gel-melt is formed - with at least partial impregnation of the fibre material with the resin acid and optionally with further components - at elevated temperature and elevated pressure by an at least one-stage mixing and compaction procedure under expansion-suppressing conditions, and essentially pore-free mouldings are produced from said gel-melt.

20. Process according to Claim 19, characterized in that the mouldings are produced in the form of granules.

21. Process according to Claim 19 or 20, characterized in that at least two, preferably a plurality, of mouldings - optionally after intermediate storage and/or conditioning and/or transport - are converted into mouldings of desired shape and dimension in at least one further process stage.

22. Process according to Claim 21, characterized in that the mouldings are converted in the at least one further process stage under high pressure and with simultaneous suppression of expansion processes, in particular by an at least one-stage extrusion or injection moulding process.

23. Process according to any of Claims 19 to 22, characterized in that
40-80% by weight, preferably 48-60% by weight, of optionally recycled fibre material, preferably based on wood and/or on cellulose;
15-45% by weight, preferably 20-35% by weight, of at least one biogenic material from the group consisting of the biopolymers, preferably, of the starches, proteins, lignins, hemicelluloses, dextrins, pectins and/or chitins, in particular starches or cereals containing a predominant amount of starch, optionally mixed with protein;
2-15% by weight, in particular 5-10% by weight, of at least one resin acid, optionally mixed with at least one fatty acid, preferably from tall oil or natural resins, optionally as an aqueous emulsion;
1-10% by weight, in particular 1.5-7% by weight, of at least one fat, preferably of drying oil and/or of wax, and
0.5-12% by weight, in particular 2-8% by weight, of at least one expansion-suppressing component from the group consisting of the polyhydric alcohols and salts,
as components of the moulding material, whose total water content is 3-13% by weight, in particular 4-12% by weight, based on the mass of all components, are subjected to the mixing and compacting procedure.

24. Process according to any of Claims 19 to 23, characterized in that the fibre material of the mouldings is furthermore at least partially impregnated with the fatty acid and/or fat/oil/wax component.

25. Process according to any of Claims 21 to 24, characterized in that a pressure of up to 1200 bar is established.

26. Process according to any of Claims 21 to 25, characterized in that, in the one or more further process stages, at least two mouldings are bonded to one another at elevated pressure and elevated temperature, in particular by thermoplastic welding of the material itself, optionally with formation of a multilayer element or laminate.

27. Process according to any of Claims 21 to 26, characterized in that, in the one or more further process stages, the mouldings are subjected to at least one thermoplastic processing step and/or at least one cutting and/or non-cutting processing step which can preferably be carried out by means of conventional wood processing apparatuses or wood processing methods.

28. Process according to Claim 19 or 20. characterized in that the mixing and compacting operation is carried out at temperatures in the range of 70-135°C, in particular of 100-125°C, and at pressures of 20-100 bar, in particular of 25-80 bar.

29. Process according to any of Claims 21 to 28, characterized in that, in the one or more further process stages, injection moulding is carried out at temperatures of 110-210°C, in particular of 150-180°C, and at pressures of 250-1200 bar, in particular of 400-700 bar.

30. Process according to any of Claims 19 to 29, characterized in that, in the first and/or at least one further process stage, glycerol, glycol or a polyoxyalkylene glycol and/or an expansion-suppressing salt, in particular NaCl, is used for suppressing the expansion process.

31. Process according to any of Claims 19 to 30, characterized in that 0.1-5% by weight, in particular 0.5-3% by weight, based in each case on the total mass, of at least one colorant, organic or inorganic filler, tanning agent, plasticizer, biocide and/or heat-curing component are furthermore added to the matrix.

32. Process according to any of Claims 19 to 31, characterized in that materials for increasing the water resistance, preferably from the group consisting of the - in particular biogenic - resins and rubbers, are furthermore added to the matrix.

33. Process according to any of Claims 19 to 32, characterized in that modifiers for the starches, in particular etherification or esterification components, and/or for the proteins, in particular pH adjusters and tanning agents, are furthermore added to the matrix.

34. Process according to any of Claims 19 to 33. characterized in that the vegetable fibre material is heated to temperatures of 170-220°C, in particular of 180-190°C, before the mixing and compacting operation.

35. Process according to any of Claims 19 to 34, characterized in that the vegetable fibre material is at least partially impregnated, while still in the heated state. with a molten or liquid component. preferably with an oil or fat component, in particular hardened vegetable fat or hardening oils.

36. Process according to any of Claims 19 to 35, characterized in that the vegetable fibre material, optionally in a form at least partly impregnated with the fat/oil/wax component and/or resin acid component, is subjected to the mixing and compacting operation in the heated state.

37. Process according to any of Claims 21 to 36, characterized in that the mouldings are treated externally by means of polyol, preferably glycerol, before further processing in the one or more further processing stages.

38. Use of the mouldings according to any of Claims 1-18 for elements of vehicle, wood and furniture construction - in particular for strips, trims, edges, profiles, panels, buttons, handles, pegs, hooks, joints, bands, connecting and anchoring elements. furniture legs, housings, accessories, dashboards, claddings, toys, precious household effects, packaging material and the like.

## Revendications

1. Pièce moulée thermoplastique, à base d'une masse de moulage issue de particules d'au moins un matériau fibreux végétal, particules noyées dans une matrice directe transformée en un état du genre gel-produit fondu, sous une température élevée et une pression élevée - matrice constituée d'au moins un bio-polymère constituant au moins un gel-produit fondu, ainsi que comprenant d'autres additifs, caractérisée en ce que
a) il se présente sous une forme générée dans des conditions de cessation de l'expansion et est pratiquement exempt de pore,
b) il présente une teneur en eau totale de 3 à 18 % en poids, de préférence de 4 à 12 % en poids, et
c) les particules du matériau fibreux végétales ont une longueur comprise dans la plage allant de 0,05 à 35 mm et sont au moins partiellement imbibées par au moins un composant d'acide résinique - le cas échéant en mélange avec un acide gras -, le composant d'acide résinique provenant du groupe des substances suivantes : acides résiniques tels que générés lors de la transformation des résines naturelles; dérivés d'acides résiniques; acides résiniques modifiés, par exemple estérifiés avec des polyols, en particulier à base de diterpène et/ou de triterpène; résines dures, résines souples (balsam) et/ou résines visqueuses, contenant de tels acides résiniques à titre de composant principal, par exemple Dammar, Kopale, Elemi, Gutti.

2. Pièce moulée selon la revendication 1, caractérisée en ce que le matériau fibreux végétal est du bois et/ou de la cellulose, de préférence issu d'un matériau fibreux recyclé, et le bio-polymère formant le gel-produit fondu contient de l'amidon et/ou une protéine.

3. Pièce moulée selon la revendication 1 ou 2, caractérisée en ce que l'acide résinique provient du tallol et/ou de résines naturelles.

4. Pièce moulée selon l'une des revendications précédentes, caractérisée en ce que l'épaisseur du matériau fibreux est de 0,05 à 3 mm, de préférence de 0,1 à 1,5 mm.

5. Pièce moulée selon l'une ou plusieurs des revendications précédentes, caractérisée en ce que le matériau fibreux contient des particules de bois, dont la longueur est de 0,15 à 35 mm, de préférence de 1 à 5 mm et leur épaisseur de 0,05 à 3 mm, de préférence de 0,1 à 1,5 mm.

6. Pièce moulée selon l'une des revendications précédentes, caractérisée en ce que dans la matrice est en plus contenu au moins un autre composant formant un gel-produit fondu, issu du groupe des bio-polymères, en particulier de la lignine, des hémi-celluloses, des dextrines, pectines et/ou chitines.

7. Pièce moulée selon l'une des revendications 1 à 5, caractérisée en ce que dans la matrice, au lieu de l'amidon et/ou d'une protéine, est contenu au moins un autre composant formant un gel-produit fondu, issu du groupe des bio-polymères, en particulier de la lignine, des hémi-celluloses, des dextrines, pectines et/ou chitines.

8. Pièce moulée selon l'une des revendications précédentes, caractérisée en ce qu'est contenue comme autre additif au moins une graisse, une huile et/ou une cire, et les particules étant de préférence imbibées avec celui-ci au moins partiellement.

9. Pièce moulée selon l'une des revendications précédentes, caractérisée en ce qu'est contenu à titre d'autre additif au moins un polyol interrompant l'expansion, de préférence de la glycérine et/ou un sel interrompant l'expansion, de préférence du NaCl.

10. Pièce moulée selon l'une des revendications précédentes, caractérisée en ce que les composants suivants sont contenus selon la composition ci-après :
| Pourcentage en poids | Pourcentage en poids préféré | Composant | Composant préféré |
|---|---|---|---|
| 48 - 80 | 48 - 60 | matériau fibreux véqétal | bois, cellulose |
| 15 - 45 | 20 - 35 | bio-polymère formant un qel fondu | amidons, protéines |
| 2 - 15 | 5 - 10 | acide(s) résinique(s), le cas échéant acide(s) gras | résines issues du tallol et/ou résines naturelles |
| 1 - 10 | 1,5 - 7 | graisses, huiles, cires | huiles durcissantes |
| 0,5 - 12 | 2 - 8 | polyols, sels stoppant l'expansion | glycérine |

11. Pièce moulée selon l'une des revendications précédentes, caractérisée en ce que sont contenus comme autres additifs, respectivement en se référant à la masse totale, de 1,5 à 5 % en poids en particulier de 0,5 à 3 % en poids d'au moins une substance issue du groupe des colorants, des charges d'origine organique ou non organique, des matières tannantes, des assouplissants, biocides et composants de durcissement à chaud durcissables, par exemple des résines aldéhydes.

12. Pièce moulée selon l'une des revendications précédentes, caractérisée en ce qu'est contenu en outre au moins un composant augmentant la résistance à l'eau et issu du groupe des résines - de préférence biogènes - et des caoutchoucs.

13. Pièce moulée selon l'une des revendications précédentes, caractérisée en ce qu'en outre sont contenus des modificateurs d'amidon, en particulier des composants d'éthérification et/ou d'estérification et/ou des modificateurs de protéine, en particulier sous la forme d'agents de réglage du pH et de matières tannantes.

14. Pièce moulée selon l'une des revendications précédentes, caractérisée en ce qu'elle présente une couche superficielle d'une profondeur allant jusqu'à environ 2 mm, dans laquelle est présente, de préférence en allant en augmentant en direction de la surface, une concentration supérieure en acides résiniques - et, le cas échéant, en graisses, huiles et/ou cires - par rapport à la concentration à l'intérieur de la pièce moulée.

15. Pièce moulée selon l'une des revendications précédentes, caractérisée en ce qu'elle présente une masse volumique supérieure à celle du matériau fibreux végétal intégré en elle, en particulier le bois, par exemple une masse volumique comprise dans la plage allant de 0,8 à 1,25 tonnes par m³.

16. Pièce moulée selon l'une des revendications précédentes, caractérisée en ce qu'elle se présente sous une forme sensiblement homogène avec des particules, réparties de façon statistiquement régulière dans la matrice.

17. Pièce moulée selon l'une des revendications précédentes, caractérisée en ce qu'elle se présente sous la forme d'un corps composite constitué d'au moins deux pièces moulées selon l'une ou plusieurs des revendications 1 à 16, le cas échéant sous forme de corps laminés, et les au moins deux pièces moulées étant reliées ensemble sur toute la surface, au moyen d'une soudure thermoplastique par le matériau propre.

18. Pièce moulée selon l'une des revendications précédentes, caractérisée en ce que ses propriétés mécaniques, en particulier ses propriétés de résistance, sont comparables à celles du bois, tandis que sa dureté superficielle correspond de préférence à celle d'un PVC dur.

19. Procédé de fabrication d'une pièce moulée à base d'un matériau fibreux végétal, avec de l'amidon et/ou une protéine dans la matrice, caractérisée en ce qu'une masse de moulage, constituée d'une matrice avec de l'amidon et/ou une protéine, d'un matériau fibreux végétal se présentant sous la forme de particules d'une longueur de 0,05 à 35 mm, d'au moins un acide résinique et de 3 à 18 % d'eau, ainsi que d'autres additifs, est préparée, à partir de laquelle - en procédant à une imbibition au moins partielle du matériau fibreux avec l'acide résinique et, le cas échéant, avec d'autres composants - on produit, à pression augmentée et à température augmentée, par un processus de mélange et de compactage à au moins une étape, dans des conditions interrompant l'expansion, un gel-produit fondu et, à partir de cela, une pièce moulée, pratiquement exempte de pore.

20. Procédé selon la revendication 19, caractérisé en ce que la pièce moulée est produite sous la forme d'un granulat.

21. Procédé selon la revendication 19 ou la revendication 20, caractérisé en ce qu'au moins deux, de préférence une pluralité de pièces moulées - le cas échéant après stockage intermédiaire et/ou conditionnement et/ou transport - sont transformées, à l'occasion d'au moins une étape de procédé supplémentaire - en donnant des pièces moulées ayant la configuration et la dimension souhaitées.

22. Procédé selon la revendication 21, caractérisé en ce que les pièces moulées sont transformées dans la au moins une étape supplémentaire de procédé, sous pression élevée et simultanément avec interruption des processus d'expansion, en particulier par au moins un processus d'extrusion ou de moulage par injection à une étape.

23. Procédé selon l'une des revendications 19 à 22, caractérisé en ce que
de 40 à 80 % en poids, de préférence de 48 à 60 % en poids de matériau fibreux, le cas échéant recyclé, de préférence à base de bois et/ou de cellulose;
de 15 à 45 % en poids, de préférence de 20 à 35 % en poids d'au moins un matériau biogène issu du groupe des bio-polymères, de préférence des amidons, protéines, lignines, hémi-celluloses, dextrines, pectines et/ou chitine, en particulier des amidons respectivement des céréales contenant principalement de l'amidon, le cas échéant en mélange avec une protéine;
de 2 à 15 % en poids, en particulier de 5 à 15 % en poids, d'au moins un acide résinique, le cas échéant en mélange avec au moins un acide gras, de préférence issu du tallol ou des résines naturelles, le cas échéant sous forme d'émulsions aqueuses;
de 1 à 10 % en poids, en particulier 1,5 à 7 % en poids d'au moins une graisse, de préférence de l'huile et/ou de la cire à action de séchage, et
de 0,5 à 12 %, en particulier de 2 à 8 % en poids d'au moins un composants interrompant l'expansion et issu du groupe des alcools et des sels polyvalents;
sont soumis au processus de mélange et de compactage, à titre de constituant de la masse de moulage, dont la teneur en eau totale, par rapport à la masse de tous les composants, est de 3 à 18 %, en particulier de 4 à 12 % en poids.

24. Procédé selon l'une des revendications 19 à 23, caractérisé en ce que le matériau fibreux des pièces de moulage est en outre au moins partiellement imbibé d'un composant d'acide gras et/ou de graisse/huile/cire.

25. Procédé selon l'une des revendications 21 à 24, caractérisé en ce que la pression est réglée jusqu'à la valeur de 1200 bar.

26. Procédé selon l'une des revendications 21 à 25, caractérisé en ce que, dans le au moins un autre étage de procédé, au moins deux pièces moulées sont liées l'une à l'autre, sous pression augmentée et sous température augmentée, en particulier par un soudage thermoplastique avec le matériau propre, le cas échéant en constituant un corps multicouche, respectivement laminé.

27. Procédé selon l'une des revendications 21 à 26, caractérisé en ce que les pièces moulées sont soumises, dans la au moins une étape de procédé supplémentaire, au moins à une transformation thermo-plastique et/ou à un au moins un usinage avec enlèvement de copeaux et/ou sans enlèvement de copeaux, de préférence pouvant être effectué à l'aide d'appareils d'usinage du bois usuels ou de procédés d'usinage du bois usuels.

28. Procédé selon la revendication 19 ou la revendication 20, caractérisé en ce que le processus de mélange et de compactage est effectué à des températures situées dans la plage allant de 70 à 135°C, en particulier de 100 à 125°C et à des pressions de 20 à 100 bar, en particulier de 25 à 80 bar.

29. Procédé selon l'une quelconque des revendications 21 à 28, caractérisé en ce que, dans la au moins une autre étape de procédé, est effectuée une transformation par moulage par injection, à des températures comprises dans la plage allant de 100 à 210°C, en particulier de 150 à 180°C et à des pressions comprises dans la plage allant de 250 à 1200 bar en particulier de 400 à 700 bar.

30. Procédé selon l'une des revendications 19 à 20, caractérisé en ce que, dans la première étape de procédé et/ou dans au moins une autre étape de procédé, est mis en oeuvre de la glycérine, du glycol ou un polyalkylène glycol et/ou un sel interrompant l'expansion, en particulier NaCl, pour interrompre le processus d'expansion.

31. Procédé selon l'une des revendications 19 à 30, caractérisé en ce qu'à la matrice est ajouté, en outre, chaque fois en se référant à la masse totale, de 0,1 à 5 %, en poids en particulier de 0,5 à 3 % en poids d'au moins un agent colorant, d'une charge d'origine organique ou non-organique, d'une matière tannante, d'un assouplissant, de biocides et/ou d'un composant de durcissement à chaud.

32. Procédé selon l'une des revendications 19 à 31, caractérisé en ce qu'à la matrice sont ajoutés en outre des matériaux destinés à augmenter la résistance à l'eau, de préférence issus du groupe des résines - en particulier biogènes - et des caoutchoucs.

33. Procédé selon l'une des revendications 19 à 32, caractérisé en ce qu'à la matrice sont ajoutés en outre encore des modificateurs destinés aux amidons, en particulier des composants d'éthérification, respectivement d'estérification, et/ou pour les protéines, en particulier des agents de réglage du pH et des matières tannantes.

34. Procédé selon l'une des revendications 19 à 33, caractérisé en ce que le matériau fibreux végétal est chauffé, avant le processus de mélange et de compactage, à des températures de 170 à 220°C, en particulier de 180 à 190°C.

35. Procédé selon l'une des revendications 19 à 34, caractérisé en ce que le matériau fibreux végétal, lorsqu'il est à l'état encore chauffé, est imbibé au moins partiellement au moins avec un composant liquide (en fusion), de préférence avec le composant huileux ou gras, en particulier de la graisse végétale durcie ou des huiles durcissantes.

36. Procédé selon l'une des revendications 19 à 35, caractérisé en ce que le matériau fibreux végétal, le cas échéant sous une forme au moins partiellement imbibée avec le composant graisse/huile/cire et/ou le composant d'acide résinique, est soumis à l'état chauffé au processus de mélange et de compactage.

37. Procédé selon l'une des revendications 21 à 36, caractérisé en ce que les pièces moulées sont traitées superficiellement, avant retransformation dans la au moins une autre étape de procédé, au moyen de polyol, de préférence de glycérine.

38. Utilisation des pièces moulées selon l'une des revendications 1 à 18, pour des éléments de la construction automobile, en bois et de meubles - en particulier pour des lattes, des barrettes décoratives, des éléments d'arête, des profilés, des écrans, des boutons, des poignées, des tourillons, des crochets, des articulations, des bandes, des éléments de liaison et d'ancrage, des pieds de meuble, des boîtiers, des parties accessoires, des tableaux de bord, des habillages, des jeux, des ustensiles de ménage précieux, du matériau d'emballage et analogues.
